# EUROPÄISCHE PATENTSCHRIFT

(11) **EP 2 018 290 B1**
(45) Veröffentlichungstag und Bekanntmachung des Hinweises auf die Patenterteilung: **28.09.2011**
(21) Anmeldenummer: 07724714.6
(22) Anmeldetag: 28.04.2007
(51) Int. Cl.: B60K 6/52, B60K 6/387, B60K 7/00, B60K 17/356, F16D 27/00

(54) **ACHSANTRIEB UND KUPPLUNGSEINRICHTUNG FÜR EIN KRAFTFAHRZEUG**
AXLE DRIVE AND CLUTCH DEVICE FOR A MOTOR VEHICLE
COMMANDE D'ESSIEU ET DISPOSITIF D'EMBRAYAGE POUR VÉHICULE À MOTEUR

(30) Priorität: 11.05.2006 DE 102006022226; 03.03.2007 DE 102007010369; 03.03.2007 DE 102007010370
(43) Veröffentlichungstag der Anmeldung: 28.01.2009
(73) Patentinhaber: Volkswagen Aktiengesellschaft, 38436 Wolfsburg (DE)
(72) Erfinder: KRUSE, Georg, 38518 Gifhorn (DE); WARNECKE, Raimar, 38179 Schwülper (DE); STREMLAU, Thomas, 49497 Mettingen (DE); MOELLER, Peter, 38464 Rümmer (DE)
(86) Internationale Anmeldenummer: PCT/EP2007/003787
(87) Internationale Veröffentlichungsnummer: WO 2007/131616

(56) Entgegenhaltungen:
- EP-A- 1 142 743
- EP-A- 1 357 317
- EP-A- 1 571 751
- DE-A1- 3 815 225
- US-A- 6 008 606
- US-A1- 2005 139 401

## Beschreibung

Die Erfindung betrifft einen Achsantrieb für ein Kraftfahrzeug, umfassend
- eine Elektromaschine zur Erzeugung eines Momentes,
- ein Differential zur Verteilung eines eingeleiteten Momentes an mit dem Differential koppelbare Räder,
- ein als ein Stirnradgetriebe ausgebildetes Übertragungsgetriebe mit mehreren jeweils eine Welle und wenigstens ein auf der Welle angeordnetes Stirnrad umfassenden Stufen, zur Übertragung des von der Elektromaschine erzeugten Momentes auf das Differential sowie
- eine Schalteinrichtung zur wahlweisen An- und Abschaltung der Momentenübertragung von der Elektromaschine auf die Räder,
wobei eine Eingangswelle des Übertragungsgetriebes direkt mit einer Abtriebswelle der Elektromaschine gekoppelt ist und eine Ausgangswelle des Übertragungsgetriebes ein Triebrad trägt, das mit einer Verzahnung eines Differentialkorbes des Differentials kämmt,
mit den Merkmalen des Oberbegriffs des Anspruch 1.

Die Erfindung betrifft weiter einen Achsantrieb mit einer elektrisch betätigten Kupplungseinrichtung zum wahlweisen Herstellen und Lösen einer drehfesten Verbindung zwischen einer Schaltwelle und einem koaxial auf der Schaltwelle angeordneten Schaltkörper durch elektrische Verstellung eines Koppelgliedes, das zwischen einem Lösezustand, in dem die Schaltwelle und der Schaltkörper gegeneinander verdrehbar sind, und einem Koppelzustand, in dem das Koppelglied sowohl die Schaltwelle als auch das Schaltelement drehfest kontaktiert, verstellbar ist.

Ein gattungsgemäßer Achsantrieb ist bekannt aus der DE 4217313A1. Diese Druckschrift offenbart ein schaltbares Differentialgetriebe, welches über ein mehrstufiges Stirnrad-Übertragungsgetriebe mit einer Elektromaschine gekoppelt ist. Diese bekannte Anordnung ist als eigenständiger Antrieb einer Achse eines Kraftfahrzeugs geeignet, und zwar sowohl als einziger oder Primärantrieb des Kraftfahrzeugs wie auch als Sekundärantrieb eines Kraftfahrzeugs zum Antrieb einer Achse, die von einem eine zweite Achse antreibenden Primärantrieb, z. B. einer Verbrennungsmaschine, nicht angetrieben wird. Der bekannte Achsantrieb zeigt ein hohes Maß an Integration, indem die Abtriebswelle der Elektromaschine direkt mit der Eingangswelle des Übertragungsgetriebes gekoppelt ist. Bei dem bekannten Achsantrieb weist das Übertragungsgetriebe zwei Stufen auf, wobei ein Stirnrad der zweiten, d.h. letzten Stufe mit einem starr mit dem Differentialkorb des Differentials gekoppelten Achsantriebsrad kämmt. Das Differential des bekannten Achsantriebs ist als ein Kegelraddifferential ausgebildet, dessen Achsräder in herkömmlicher Weise über Ausgleichsräder gekoppelt sind. Eines der Achsräder ist in herkömmlicher Weise drehfest mit einer Flanschwelle zur Ankopplung eines Rades verbunden. Das zweite Achsrad ist hingegen mit einer Hohlwelle verbunden, in der koaxial eine Flanschwelle zur Ankopplung eines zweiten Rades drehbar gelagert ist. Die Hohlwelle und die in ihr gelagerte Flanschwelle sind über eine als Lamellenkupplung ausgebildete Schalteinrichtung miteinander koppelbar. In einer ersten Stellung der Lamellenkupplung sind die Hohlwelle und die in ihr gelagerte Flanschwelle drehfest miteinander verbunden und die Hohlwelle ist gegenüber dem Differentialgehäuse drehbar. In dieser Stellung wirkt das Differential als herkömmliches Ausgleichsdifferential. In einer zweiten Stellung der Lamellenkupplung ist die Hohlwelle starr mit dem Differentialgehäuse gekoppelt, während die in der Hohlwelle gelagerte Flanschwelle frei drehen kann. In diesem Zustand wird ein asymmetrischer Antrieb realisiert, bei dem lediglich die erste Flanschwelle angetrieben ist, während die zweite, in der Hohlwelle drehende Flanschwelle frei mitläuft. Außer dem einseitigen Antrieb ist bei dieser zweiten Stellung der Lamellenkupplung auch ein anderes Übersetzungsverhältnis als bei ihrer ersten Stellung realisiert, wobei sich die Änderung des Übersetzungsverhältnisses aus bekannten Gesetzen, die die Funktion eines Sperrdifferentials beschreiben, herleiten lässt. In einer dritten Stellung der Lamellenkupplung ist schließlich die Hohlwelle weder mit dem Differentialgehäuse noch mit der in ihr gelagerten Flanschwelle gekoppelt. In dieser Stellung der Lamellenkupplung dreht der Differentialkorb frei und die Momentenübertragung zwischen der Elektromaschine und den Rädern ist abgeschaltet.

Nachteilig bei dieser bekannten Vorrichtung ist zum einen ihr komplizierter Aufbau, der sich insbesondere aus der Realisierung verschiedener Übersetzungsverhältnisse herleitet. Bei Verwendung moderner Elektromaschinen und insbesondere bei Einsatz des Achsantriebs als Sekundärantrieb, der lediglich bei geringen Geschwindigkeiten des Kraftfahrzeugs zum Einsatz kommt, ist eine solche Schaltmöglichkeit nicht erforderlich. Ein weiterer Nachteil der bekannten Vorrichtung besteht darin, dass auch bei abgeschalteter Momentenübertragung zwischen der Elektromaschine und den Rädern der ein hohes Trägheitsmoment aufweisende Differentialkorb ständig weiter von der Elektromaschine angetrieben wird, was zu erhöhtem Energieverbrauch und unerwünschter Geräuschentwicklung führt.

Im Dokument EP 1 142 743 A2 werden verschiedene Ausführungsformen eines Achsantriebs mit einem Elektromotor, einem Stirnradgetriebe und einem Differential offenbart, wobei zwischen dem Elektromotor und dem Differential eine rampenbetätigte oder druckluftbetätigte Kupplungseinrichtung angeordnet ist, so dass der Kraftfluss vom Elektromotor zum Differential unterbrochen werden kann.

Im Dokument US 2005/0139401 A1 ist ein Achsantrieb mit einem Elektromotor und einem Differential beschrieben, wobei ein Stirnrad mit einer Eingangswelle über eine extern betätigte Klauenkupplung mit Synchronisierungsring verbindbar ist.

Es ist die Aufgabe der vorliegenden Erfindung, einen gattungsgemäßen Achsantrieb einfacher, energiesparender und geräuschärmer auszubilden.

Diese Aufgabe wird durch einen Achsantrieb mit den Merkmalen des Anspruchs 1 gelöst.

Ein wesentlicher Gedanke der vorliegenden Erfindung ist es, die Schalteinrichtung aus dem Differential in das vorgelagerte Übertragungsgetriebe zu verlegen. Auf diese Weise kann als Differential jedes herkömmliche Differential verwendet werden, was insbesondere bei der Umrüstung von herkömmlichen Kraftfahrzeugen auf Hybrid-Kraftfahrzeuge ein erhebliches Einsparpotenzial bietet, da keine wesentlichen Änderungen der in herkömmlichen Kraftfahrzeugen eingesetzten Differentiale vorgenommen werden müssen.

Die erfindungsgemäß vorgesehene Art der Schalteinrichtung, nämlich als wahlweise Kopplung zwischen dem Schaltrad und der ihm zugeordneten Schaltwelle, erlaubt zudem eine sehr kompakte Bauweise, was im Hinblick auf den benötigten Bauraum vorteilhaft ist. Insbesondere lässt sich auf diese Weise eine parallele Anordnung der Elektromaschine, der Wellen des Übertragungsgetriebes und des Differentialkorbes realisieren, so dass ein hohes Maß an Integration erreicht werden kann.

Bei einer bevorzugten Ausführungsform der Erfindung ist das Schaltrad auf der Ausgangswelle des Übertragungsgetriebes angeordnet. Dies bedeutet, dass die Welle der letzten Stufe des Übertragungsgetriebes als Schaltwelle wirkt. Bevorzugt ist ein dreistufiges Übertragungsgetriebe, insbesondere mit starrer Übersetzung, vorgesehen, wobei die dritte Stufe in einem Zwischenraum zwischen der Elektromaschine und dem Differential angeordnet ist. Die erste und zweite Stufe des Übertragungsgetriebes können eingesetzt werden, um die Baubreite der Elektromaschine zu überbrücken und um einen Teil der vorzugsweise hohen Übersetzung, wie etwa 1:14, zu realisieren. Dieser Teil des Getriebes kann variabel gestaltet sein, so dass durch Wahl der Zahnzahlen der beteiligten Stirnräder eine Anpassung an das jeweilige Kraftfahrzeugmodell vorgenommen werden kann. Schaltstufe des Übertragungsgetriebes und das Differential bleiben hingegen vorzugsweise modellübergreifend gleich. Die Angleichung des Bauraums der beiden ersten Stufen des Übertragungsgetriebes an die Baubreite der Elektromaschine ist insbesondere in vollintegrierten Fällen günstig in denen die Abtriebswelle der Elektromaschine einstückig mit der Eingangswelle des Übertragungsgetriebes ausgebildet ist. Andererseits kann die Verbindung zwischen der Abtriebswelle der Elektromaschine und der Eingangswelle des Übertragungsgetriebes auch durch eine direkte Kopplung erfolgen, z. B. durch eine Welle/Nabe-Verbindung.

Als Schalteinrichtung zur wählbaren Kopplung zwischen dem Schaltrad und der zugeordneten Schaltwelle haben sich insbesondere zwei alternative Varianten bewährt. In einfachen Fällen, kann die Schalteinrichtung als Klauenkupplung ausgebildet sein, die eine axial auf der Schaltwelle bewegbare und drehfest mit ihr verbundene Schiebemuffe mit einer Verzahnung aufweist, die im eingekuppelten Zustand in eine Verzahnung eines mit dem Schaltrad drehfest verbundenen Kupplungskörper eingreift. Derartige Klauenkupplungen sind von ihrem Prinzip her aus manuellen betätigten Getrieben bekannt.

Bei einer anderen, bevorzugten Ausführungsform der Erfindung ist die Schalteinrichtung als Synchronisierung ausgebildet, die eine axial auf der Schaltwelle bewegbare und drehfest mit ihr verbundene Schiebemuffe mit einer Verzahnung aufweist, die im eingekuppelten Zustand in eine Verzahnung eines mit dem Schaltrad drehfest verbundenen Kupplungskörpers eingreift, wobei ein gegenüber der Schiebemuffe beschränkt drehbeweglicher Synchronkörper das Eingreifen erst gestattet, wenn keine Relativbewegung zwischen Schaltrad und Schaltwelle vorliegt. Derartige Synchronisierungen sind ebenfalls grundsätzlich aus manuell betätigten Schaltgetrieben bekannt. Der Kupplungskörper ist dabei vorzugsweise an das Schaltrad angeschweißt oder angeschmiedet. Im eingeschalteten Zustand gelangt die Leistung über den Kupplungskörper, die Schiebemuffe und den Synchronkörper auf die Schaltwelle. Die Schiebemuffe kann dabei je nach Betätigungseinrichtung unterschiedlich ausgeführt sein. Vorzugsweise ist die Muffe ohne Nut oder Steg ausgeführt, sondern besitzt axiale Anlaufflächen oder Lagersitze für Axiallager, über die die Schaltkraft aufgebracht wird. Alternativ sind auch Schiebemuffen mit Nuten oder Stegen für den Eingriff von Schaltgabeln möglich.

Bei der bevorzugten Ausführungsform der Schalteinrichtung als Synchronisierung ist vorzugsweise vorgesehen, dass bei mindestens einem der Schaltkörper, d.h. Kupplungskörper oder Schiebemuffe, vorzugsweise jedoch bei beiden, die Hinterlegung auf ein Minimum reduziert wird bzw. entfällt, d.h. Hinterlegungswinkel etwa 0°. Die Synchronisierung wird vorzugsweise für hohe Synchronisierungsleistungen ausgelegt, die bei Regelstörungen der Elektromaschine oder durch hochdynamische Änderungen der Raddrehzahlen durch Fahrbahneinfluss auftreten können. Damit die maximalen Synchronisierungsleistungen bei kleinen Betatigungskräften und kurzen Schaltzeiten erreicht werden, wird vorzugsweise eine Mehrkonus-Synchronisierung insbesondere mit zwei oder drei Konen verwendet.

Die Rückstellung der Schiebemuffe erfolgt entweder direkt oder indirekt, insbesondere über Federn. Die Federn sind vorzugsweise so dimensioniert, dass eine Rückstellkraft von 20-400 Newton realisiert wird, um eine schnelle Rückstellung, d.h. eine rasche Entkopplung zwischen Elektromaschine und Rädern vorzugsweise innerhalb von 0,1-0,25 Sekunden zu realisieren.

Bevorzugt ist die Schiebemuffe derart federvorgespannt, dass das Schaltrad und die Schaltwelle im unbetätigten Zustand der Schiebemuffe entkoppelt sind. Mit anderen Worten ist vorzugsweise eine "Normaly-Open"-Konfiguration realisiert. Alternativ kann auch eine aktive Rückstellung vorgesehen sein. Die Einstellung der Schiebemuffe kann auf jede motorische, dem Fachmann bekannte Weise erfolgen. Insbesondere kann eine Betätigungseinrichtung, die der Einstellung der Schiebemuffe dient, elektromotorisch, elektromagnetisch durch Hubmagnet, pneumatisch, hydraulisch oder auf andere Weise arbeiten.

Der Angriff der Betätigungseinrichtung an der Schiebemuffe kann auf unterschiedliche Weise gestaltet sein. Besonders vorteilhaft ist es, wenn die Schiebemuffe mittels eines in der hohl ausgeführten Schaltwelle angeordneten Betätigungselementes der Betätigungseinrichtung bewegbar ist. Diese Variante, bei der beispielsweise ein Hubmagnet in Verlängerung der Schaltwelle angebracht und mit einem Stößel in die hohle Schaltwelle hineinragen kann, ist im Hinblick auf die Bauraumanforderungen besonders vorteilhaft. Mechanisch einfacher zu realisieren sind jedoch Ausführungsformen, bei denen die Betätigungseinrichtung benachbart zu der Schaltwelle angeordnet ist und die Schiebemuffe über ein Betätigungselement mit einer axial gerichteten Kraft beaufschlagbar und somit axial bewegbar ist. Das Betätigungselement kann beispielsweise tangential in Form einer Schaltgabel außen an der Schiebemuffe ansetzen. Alternativ kann das Betätigungselement auch an einer quer zur Axialrichtung liegenden Fläche, beispielsweise einer Bodenfläche der Schiebemuffe, angreifen.

Eine besonders vorteilhafte Ausführungsform der letztgenannten Alternative wird durch eine Weiterbildung der eingangs genannten Kupplungseinrichtung realisiert, die allerdings auch unabhängig von dem erfindungsgemäßen Achsantrieb eingesetzt werden kann. Die eingangs erwähnte Kupplungseinrichtung ist bekannt aus der JP 2005-137169A. Diese Druckschrift offenbart eine Kupplungseinrichtung zur Zu- und Abschaltung der Kopplung einer Elektromaschine mit der Hinterachse eines Kraftfahrzeugs. Mit Hilfe der Kupplungseinrichtung ist eine drehfeste Verbindung zwischen einer ersten, hier Schaltwelle genannten Welle und einer koaxial zu dieser angeordneten zweiten Welle, die hier Schaltkörper genannt wird, herstellbar bzw. lösbar. Gekoppelt mit der inneren Welle ist ein sechseckiger Klemmkörper vorgesehen, der von dem zylindrischen Innenrand der äußeren Welle beabstandet ist. In dem Zwischenraum zwischen dem Klemmkörper und der Innenwandung der äußeren Welle ist ein Käfig mit sechs äquidistant über den Umfang verteilten Kugeln vorgesehen. Der Durchmesser der Kugeln ist so auf den Abstand zwischen dem Klemmkörper und der Innenwand der äußeren Welle abgestimmt, dass der senkrechte Abstand zwischen den Seitenmitten des von dem Klemmkörper gebildeten Sechsecks von der Innenwand der äußeren Welle größer ist als der Durchmesser der Kugeln und der senkrechte Abstand zwischen den Ecken des Klemmkörpers und der Innenwand der äußeren Welle kleiner ist als der Durchmesser der Kugeln. In der Lösestellung sind die Kugeln benachbart zu der Seitenmitte des Klemmkörpers angeordnet, so dass keine Kopplung zwischen den Wellen besteht. Zur Herstellung einer drehfesten Verbindung zwischen den Wellen wird der Käfig mittels einer elektromagnetischen Betätigungsvorrichtung so weit gedreht, dass die Kugeln benachbart zu den Ecken des Klemmkörpers zu liegen kommen und sich zwischen dem Klemmkörper und der Innenwand der Außenwelle verkeilen. Hierdurch wird eine drehfeste Verbindung zwischen der Außenwelle und dem Klemmkörper und somit der Innenwelle hergestellt.

Nachteilig bei der bekannten Vorrichtung ist zum einen die notwendige große Materialhärte, die erforderlich ist, um verschleißarm die hohen Klemmkräfte zu tolerieren. Ein weiterer Nachteil besteht darin, dass der Schaltmoment nicht präzise bestimmt werden kann, da zwischen der Lösestellung und der Kopplungsstellung ein Spielwinkel von mindestens 30° liegt. Schließlich ist es ein Nachteil der bekannten Vorrichtung, dass sowohl der Übergang in die Koppelstellung als auch von der Koppelstellung in die Lösestellung eine aktive Betätigung erfordert, so dass insbesondere bei Ausfall der elektromagnetischen Betätigungsvorrichtung im Kopplungszustand keine automatische Entkopplung erfolgt.

Einer Weiterbildung liegt die Aufgabe zugrunde, eine alternative Kupplungseinrichtung zur Verfügung zu stellen, die ein schnelleres und präziseres Schalten ermöglicht und in einer bevorzugten Ausführungsform einen automatischen Übergang in die Lösestellung bei Ausfall der Betätigungseinrichtung sicherstellt. Eine derartig verbesserte Kupplungsvorrichtung wäre insbesondere zur Betätigung der Schalteinrichtung des erfindungsgemäßen Achsantriebs sehr gut geeignet.

Die Aufgabe wird in Verbindung mit den Merkmalen des Oberbegriffs von Anspruch 11 gelöst durch ein Paar koaxial zu der Schaltwelle angeordneter Rampenscheiben mit einander gegenüberliegenden, korrespondierenden und sich ring- oder teilringförmig erstreckenden Führungen von denen wenigstens eine eine sich über ihre Länge rampenartig ändernde Tiefe aufweist, zur Führung von Abstandskugeln, wobei eine der Rampenscheiben axial gehäusefest und die andere der Rampenscheiben axial verschiebbar ist und eine der Rampenscheiben relativ zu der anderen mittels eines Elektromotors über einen beschränkten Sektor derart drehbar ist, dass mit der Drehung ein durch Wechselwirkung der Abstandskugeln mit ihren Führungen bestimmter Abstand der Rampenscheiben einstellbar und das mit der axial verschiebbaren Rampenscheibe in Wirkkontakt stehende und als Schiebemuffe ausgebildete Koppelglied zwischen seiner Koppelstellung und seiner Lösestellung axial verschoben werden kann.

Die. Weiterbildung basiert auf einer völligen Umgestaltung der bekannten Kupplungseinrichtung. Als Betätigungselement wird ein Paar koaxial zu der Schaltwelle angeordneter Rampenscheiben eingesetzt. Zwischen den Rampenscheiben werden Abstandskugeln geführt, die in Nuten der Rampenscheiben gelagert sind. Die Nuten erstrecken sich konzentrisch um den Scheibenmittelpunkt, wobei jede Nut vorzugsweise aus drei Teilabschnitten, die sich jeweils über etwa 120° erstrecken, aufgebaut ist. Auch ist es möglich, dass die Nuten nicht durchgehend realisiert sind, sondern in mehreren, strikt voneinander getrennten Teilabschnitten. Die Tiefe der Nuten ändert sich mit der Länge ihrer Erstreckung. Dies bedeutet, dass bei einer relativen Verdrehung der Rampenscheiben zueinander die Abstandskugeln tiefer oder weniger tief in den Nuten versenkt sind. Dies führt dazu, dass im Fall, dass die Rampenscheiben derart zueinander kraftbeaufschlagt sind, dass beide Rampenscheiben stets Kontakt zu den Abstandskugeln haben, sich der Abstand der Rampenscheiben zueinander mit ihrer relativen Drehung ändert. Dabei ist vorgesehen, dass eine der Rampenscheiben axial festgelegt ist und die zweite Rampenscheibe axial verschieblich ist, wobei eine der Rampenscheiben drehbar ist. Dies ist vorzugsweise diejenige Rampenscheibe, die auch axial verschiebbar ist. Wird nun die drehbare Rampenscheibe mit Hilfe des Elektromotors über einen beschränkten Sektor, der vorzugsweise mit dem von jedem Teilabschnitt der Führungsnuten überspannten Sektor korreliert ist, verdreht, kann der Abstand der Rampenscheiben zueinander sehr genau eingestellt werden.

Auf diese Weise wird ein auf der Schaltwelle axial bewegliches Betätigungselement geschaffen, über welches eine Schiebemuffe axial bewegt werden kann, die dann in einer im Grunde bekannten Weise eine formschlüssige Verbindung zwischen der Schaltwelle und dem vorzugsweise als Schaltrad ausgeführten Schaltkörper herstellen kann. Vorzugsweise wird eine Anordnung gewählt, bei der der Koppelzustand zwischen Schaltwelle und Schaltrad bei maximalem Abstand der Rampenscheiben zueinander realisiert ist und umgekehrt der Lösezustand zwischen Schaltwelle und Schaltrad bei minimalem Abstand der Rampenscheiben realisiert ist.

Die Betätigung der Axialverschiebung der Schiebemuffe erfolgt vorzugsweise, indem ein von dem Elektromotor betätigtes oder mit diesem gekoppeltes Stirnrad mit einer Verzahnung der drehbaren Rampenscheibe kämmt. Im Fall, dass die drehbare Rampenscheibe auch zugleich die axial verschiebliche ist, wird die Höhe des Stirnrades günstigerweise so groß gewählt, dass es in jedem Abstandszustand der Rampenscheiben zueinander noch mit der Verzahnung der drehbaren und axial verschieblichen Rampenscheibe kämmt.

Um eine sehr präzise Abstandseinstellung der Rampenscheiben zueinander zu erreichen, ist vorteilhafterweise vorgesehen, dass der Sektor, in dem die drehbare Rampenscheibe drehbar ist, wenigstens 90° beträgt. Wie erwähnt, bestehen die Führungsnuten vorzugsweise aus drei Teilabschnitten von jeweils etwa 120°. Diesen maximal möglichen Einstellungsbereich gilt es möglichst umfassend zu nutzen. Weiter kann die Einstellungspräzision des Abstandes der Rampenscheiben durch eine geeignete Übersetzung zwischen dem Elektromotor und der drehbaren Rampenscheibe erreicht werden.

Die Wechselwirkung des als Schiebemuffe ausgebildeten Koppelgliedes kann auf unterschiedliche Weise umgesetzt werden. Bei einer besonders günstigen Ausführungsform ist vorgesehen, dass die Schiebemuffe über einen Synchronkörper eine formschlüssige Verbindung zwischen der Schaltwelle und dem Schaltkörper, d.h. insbesondere dem Schaltrad, erzeugt. Dies ist vom Prinzip her von Synchronisierungen manuell betätigter Getriebe bekannt.

Alternativ kann bei einer konstruktiv einfacheren Variante die Schiebemuffe auch nach Art einer Klauenkupplung direkt die formschlüssige Verbindung zwischen Schaltwelle und Schaltkörper, d.h. insbesondere Schaltrad erzeugen.

Wie oben bereits erwähnt, ist es wünschenswert, wenn die Kupplungseinrichtung im Fall einer Störung des Elektromotors selbsttätig in die Lösestellung übergeht. Dies wird vorzugsweise dadurch erreicht, dass die Schiebemuffe bzw. die axial bewegliche Rampenscheibe in Richtung eines minimalen Abstandes zwischen den Rampenscheiben federvorgespannt ist. Unterstützend kann in besonders vorteilhafter Weise vorgesehen sein, dass die zur Abstandssteigerung der Rampenscheiben erforderliche Drehung der Drehrichtung des Schaltkörpers im Koppelzustand entgegengerichtet ist. Es ist für den Fachmann offensichtlich, dass irgendwo im Kopplungsstrang zwischen der axial beweglichen Rampenscheibe, die höchstens um den von dem Elektromotor angesteuerten Sektor drehbar ist, und dem im Koppelzustand zusammen mit der Schaltwelle umlaufenden Schaltrad eine Drehentkopplung vorgesehen sein muss. Diese ist vorzugsweise als ein Axialnadellager an der Schnittstelle zwischen der Rampenscheibe und der Schiebemuffe ausgebildet. Im Fall einer Blockade dieser Entkopplungsstelle, d.h. im Fall, dass die Rampenscheibe von der Drehung des Schaltrades mitgerissen wird, ist vorzugsweise vorgesehen, dass sich durch diese Drehung der Abstand zwischen den Rampenscheiben nicht weiter vergrößert, sondern vielmehr verkleinert, d.h. das automatisch ein Übergang in den Lösezustand initiiert wird.

Aus dem Vorangehenden wird dem Fachmann klar, dass die Kupplungseinrichtung in ihrer bevorzugten Ausführungsform aktiv im Koppelzustand gehalten werden muss. Dies wird günstigerweise dadurch erreicht, dass ein Sensor vorgesehen ist, der das Erreichen des Koppelzustandes erkennt und an ein Steuergerät meldet. Das Steuergerät betätigt dann eine elektrische Bremse des Elektromotors, um den Koppelzustand auch entgegen der Reibungskraft der vorzugsweise als Axialnadellager ausgebildeten Drehentkopplung aufrechtzuerhalten. Es hat sich gezeigt, dass ein Elektromotor mit einem maximalen Motornennmoment von weniger als 1,5 Nm typischerweise zur Betätigung der erfindungsgemäßen Kupplungseinrichtung ausreicht und eine elektrische Bremse des Motors mit einem Bremsnennmoment von nicht mehr als 0,7 Nm typischerweise ausreicht, um den Koppelzustand beizubehalten. Im Fall eines Ausfalls des Elektromotors und somit auch seiner elektrischen Bremse, wird die erfindungsgemäße Kupplungsvorrichtung einerseits aufgrund der Federvorspannung und andererseits auch mit Hilfe der Reibung an der Entkopplungsstelle automatisch in den Lösezustand überführt.

Weitere Merkmale und Vorteile der vorliegenden Erfindung ergeben sich aus der nachfolgenden, speziellen Beschreibung und den Zeichnungen. Es zeigen:
- Fig. 1: eine schematische Darstellung eines Kraftfahrzeugs mit erfindungsgemäßem Achsantrieb,
- Fig. 2: eine erste Ausführungsform eines erfindungsgemäßen Achsantriebs,
- Fig. 3: eine Detaildarstellung der letzten Übersetzungsstufe des Übertragungsgetriebes der Ausführungsform von Fig. 2,
- Fig. 4: eine zweite Ausführungsform eines erfindungsgemäßen Achsantriebs,
- Fig. 5: eine dritte Ausführungsform eines erfindungsgemäßen Achsantriebs.

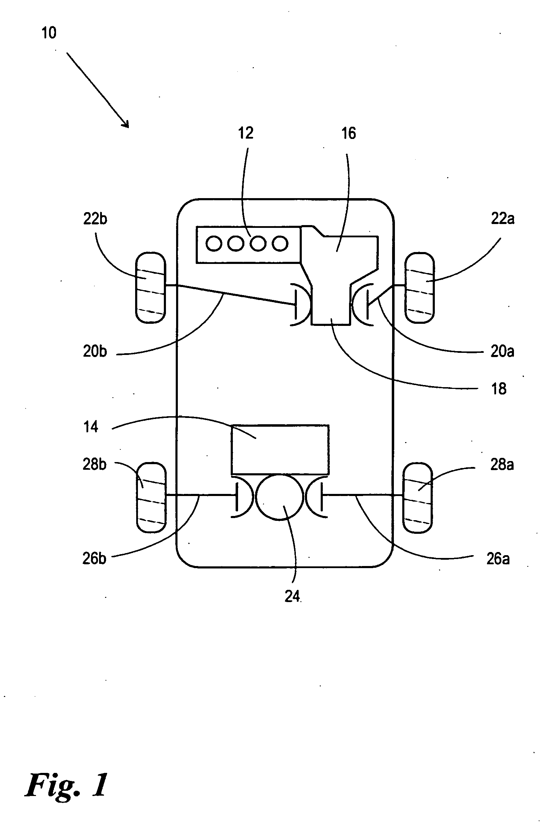

Fig. 1 zeigt in stark schematisierter Darstellung ein Kraftfahrzeug 10 mit zwei Antriebsmotoren, nämlich einem Verbrennungsmotor 12 und einer Elektromaschine 14. Der Verbrennungsmotor 12 ist über ein Schaltgetriebe 16 mit angekoppeltem Ausgleichsgetriebe 18 mit der Vorderachse, umfassend zwei Gelenkwellen 20a und 20b mit den Vorderrädern 22a und 22b gekoppelt.

Die Elektromaschine 14 ist über ein nicht dargestelltes Übertragungsgetriebe mit dem Differential 24 und dieses über Gelenkwellen 26a und 26b mit den Hinterrädern 28a und 28b gekoppelt. Der elektrische Hinterachsantrieb kann vorzugsweise bei geringen Geschwindigkeiten, z.B. < 30 km/h, als einziger Antrieb des Fahrzeugs verwendet werden oder kann zu dem Vorderachsantrieb zugeschaltet werden, um bei geringen Geschwindigkeiten einen Allradantrieb zu realisieren. Die vorliegende Erfindung, die sich auf spezielle Aspekte des in Fig. 1 als Hinterachsantrieb dargestellten Antriebs bezieht, ist jedoch nicht auf Konfigurationen gemäß Fig. 1 beschränkt.

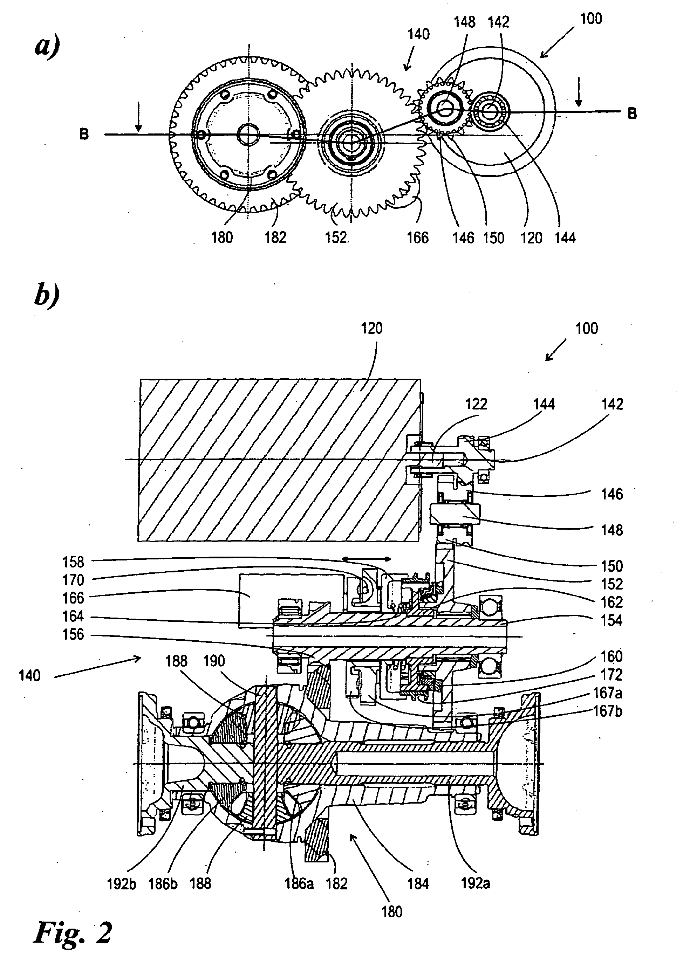

Fig. 2 zeigt eine erste Ausführungsform eines erfindungsgemäßen Achsantriebs 100, wobei Teilfigur a) eine Ansicht in axialer Richtung darstellt, während Teilfigur b) eine Schnittdarstellung entlang der Schnittlinie B-B in Teilfigur a) zeigt.

Der Achsantrieb 100 umfasst im Wesentlichen drei Hauptbestandteile, nämlich eine Elektromaschine 120, ein dreistufiges Übertragungsgetriebe 140 und ein Differential 180.

Die Elektronmaschine 120 erzeugt ein Drehmoment, das an der Abtriebswelle 122 der Elektromaschine 120 anliegt: Bei der in Fig. 1 dargestellten Ausführungsform ist die Abtriebswelle 122 mit der Eingangswelle 142 mittels einer Welle/Nabe-Verbindung gekoppelt. Die Eingangswelle 142 bildet zusammen mit ihrem zugeordneten, auf ihr drehfest angeordneten und im dargestellten Ausführungsbeispiel einteilig ausgeführten Eingangsstirnrad 144 die erste Stufe des Übertragungsgetriebes 140. Mit dem Eingangsstirnrad 144 kämmt ein erstes Zwischenstirnrad 146 der zweiten, hier als Zwischenstufe bezeichneten Stufe des Übertragungsgetriebes 140. Das erste Zwischenstirnrad 146 ist im gezeigten Ausführungsbeispiel drehbar um einen starr mit einem nicht dargestellten Gehäuse verbundenen Bolzen 148 gelagert. Ebenfalls drehbar um den Bolzen 148 gelagert und drehfest mit dem ersten Zwischenstirnrad 146 gekoppelt ist ein zweites Zwischenstirnrad 150, das im gezeigten Ausführungsbeispiel zusammen mit dem ersten Stirnrad 146 einen einteiligen Radkörper bildet. Insbesondere durch Wahl der Größen und Zahnzahlen des Eingangsstirnrades 144 und des ersten Zwischenstirnrades 146 kann eine Anpassung des erfindungsgemäßen Achsantriebs an die Vorgaben bestimmter Kraftfahrzeugmodelle angepasst werden. Die nachfolgenden Elemente bleiben hingegen vorzugsweise modellübergreifend gleich.

Die dritte Stufe des Übertragungsgetriebes 140 bildet bei der dargestellten Ausführungsform die eigentliche Schaltstufe. Das zweite Zwischenrad 150 der Zwischenstufe kämmt mit einem Schaltrad 152, welches axial fest und im ungeschalteten Zustand drehbar um eine Schaltwelle 154 gelagert ist. Die Schaltwelle 154 dient bei der dargestellten Ausführungsform zugleich als Triebwelle zum Antrieb des nachgeschalteten Differentials 180. Mittels einer weiter unten im Zusammenhang mit Figur 2 näher erläuterten Schalteinrichtung kann das Schaltrad 152 drehfest mit der Schaltwelle 154 gekoppelt werden. Hierdurch wird das über die beiden ersten Stufen des Übertragungsgetriebes 140 eingeleitete Drehmoment auf das drehfest mit der Triebwelle 154 gekoppelte und in der dargestellten Ausführungsform einteilig ausgeführte Triebrad 156 übertragen. Das Triebrad 156 kämmt mit dem Antriebsrad 182 des Differentials 180, wobei das Antriebsrad 182 drehfest mit dem Differentialkorb 184 verbunden ist.

Das Differential 180 ist im Wesentlichen ein bekanntes Kegelraddifferential mit zwei Achsrädern 186a und 186b, die über Ausgleichsräder 188, die sich um einen mit dem Differentialkorb 184 starr gekoppelten Bolzen 190 drehen, gekoppelt sind. Bei der dargestellten Ausführungsform sind die Achsräder 186a und 186b unmittelbar mit Flanschwellen 192a und 192b verbunden, die auf herkömmliche Weise mit den nicht dargestellten Hinterrädern des Kraftfahrzeugs koppelbar sind.

Die Schalteinrichtung zur wahlweisen Herstellung und Lösung einer drehfesten Verbindung zwischen dem Schaltrad 152 und der Schaltwelle 154 ist in der gezeigten Ausführungsform als eine Synchronisierung ausgeführt, wie sie grundsätzlich aus manuell betätigten Schaltgetrieben bekannt ist.

Die Synchronisierung umfasst eine Schiebemuffe 158, die drehfest mit der Schaltwelle 154 und auf dieser axial verschiebbar gelagert ist. Die Schiebemuffe 158 weist eine Innenverzahnung auf, die im gekoppelten Zustand in eine Außenverzahnung eines drehfest mit dem Schaltrad 152 verbundenen Kupplungskörpers 160 eingreift. Zur Reduzierung des Verschleißes und zur Vermeidung unerwünschter Geräusche beim Schaltvorgang ist zwischen der Schiebemuffe 158 und dem Kupplungskörper 160 ein Synchronkörper 162 angeordnet, der gegenüber der Schiebemuffe 158 beschränkt, insbesondere um eine halbe Zahnbreite, verdrehbar ist. Wenn beim Schaltvorgang die Schiebemuffe 158 in axialer Richtung auf den Kupplungskörper 160 zu verschoben wird, läuft der Synchronkörper 162 auf einen Reibkonus auf, so dass er durch den Reibschluss um eine halbe Zahnbreite gegen die Schiebemuffe 158 versetzt ist. In diesem Zustand verhindert der Synchronkörper 162 einen weiteren Vorschub der Schiebemuffe 158 solange bis diese - und mit ihr die Schaltwelle 154 - dieselbe Rotationsgeschwindigkeit erreicht wie der Kupplungskörper - und mit ihm das Schaltrad. Erst wenn keine Relativgeschwindigkeit zwischen der Schiebemuffe 158 und dem Kupplungskörper 160 mehr gegeben ist, ist der Synchronkörper 162 kräftefrei und erlaubt einen verschleiß- und gerauscharmen Eingriff der Innenverzahnung der Schiebemuffe 158 in die Außenverzahnung des Kupplungskörpers 160.

Die Schiebehülse 158 ist mittels einer Spiralfeder 164 so vorgespannt, dass das Schaltrad 152 und die Schaltwelle 154 ohne Anliegen einer Schaltkraft entkoppelt sind.

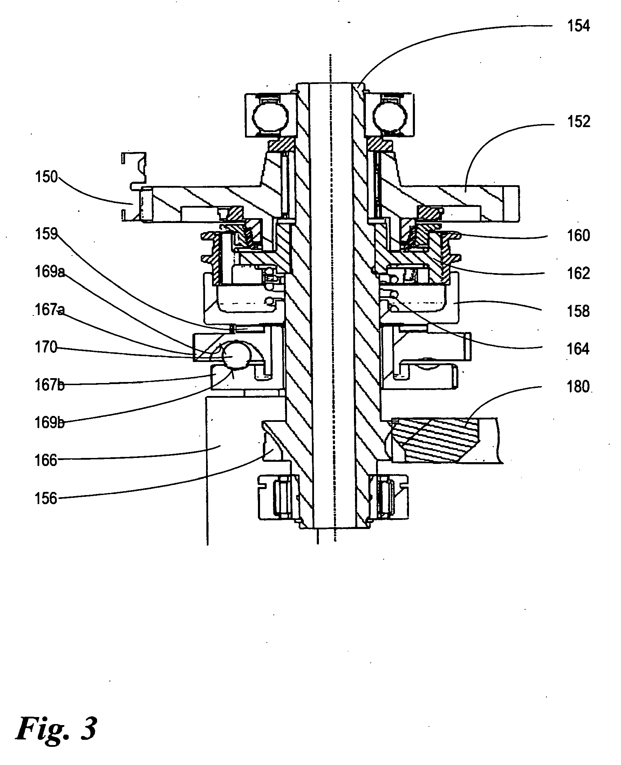

Zur Aufbringung der Schaltkraft ist bei der dargestellten Ausführungsform ein besonderer Mechanismus vorgesehen, der nachfolgend anhand von Figur 3, die die detaillierter darstellt.

Fig. 3 zeigt eine Schnittdarstellung durch die in der dritten Übersetzungsstufe des Übertragungsgetriebes 140 eingesetzte Kupplungsvorrichtung, die allerdings auch unabhängig von dem hier diskutierten Achsantrieb 100 einsetzbar ist und nur eine Ausführungsform einer universell einsetzbaren Kupplungsvorrichtung darstellt. Die im Rahmen des Kupplungsvorgangs zu verbindenden Bestandteile sind zum einen die Schaltwelle 154 und zum anderen das Schaltrad 152, das drehbar und axial fixiert auf der Schaltwelle 154 angeordnet ist. Das Schaltrad 152 wird von der vorgeschalteten Getriebestufe, von der in Fig. 3 lediglich das mit dem Schaltrad 152 kämmende zweite Zwischenrad 150 bereichsweise dargestellt ist, angetrieben. Im entkoppelten Zustand rotiert das Schaltrad 152 frei um die Schaltwelle 154. Im gekoppelten Zustand hingegen rotiert die Schaltwelle 154 mit dem Schaltrad 152, so dass das fest mit der Schaltwelle 154 verbundene Triebrad 156 das Antriebsrad 182 des Differentialkorbes 180 antreiben kann.

Zur Herstellung einer drehfesten Kopplung zwischen der Schaltwelle 154 und dem Schaltrad 152 wird die Schiebemuffe 158 gegen die Federkraft axial verschoben, so dass ihre Innenverzahnung in die Außenverzahnung des mit dem Schaltrad 152 drehfest verbundenen Kupplungskörpers 160 eingreift. Zur Minimierung von Verschleiß und Schaltgeräuschen ist zwischen der Schiebemuffe 158 und dem Kupplungskörper 160 der Synchronkörper 162 angeordnet, der gegenüber.der Schiebemuffe 158 beschränkt verdrehbar ist. Der Verdrehbarkeitsbereich des Synchronkörpers 162 gegenüber der Schiebemuffe 158 beträgt vorzugsweise in etwa eine halbe Zahnbreite. Beim Schaltvorgang verhindert der Synchronkörper 162 einen Eingriff der Verzahnung der Schiebemuffe 158 in die Verzahnung des Kupplungskörpers 160 so lange, bis die Schaltwelle 154 durch Reibschluss auf die Drehgeschwindigkeit des Schaltrades 152 beschleunigt ist. Zu diesem Zeitpunkt richtet sich die Verzahnung des Synchronkörpers 162 mit derjenigen der Schiebemuffe 158 aus, so dass letztere in die Verzahnung des Synchronkörpers 160 eingreifen und eine drehfeste Verbindung zwischen der Schaltwelle 154 und dem Schaltrad 152 herstellen kann.

Zur axialen Verrückung der Schiebemuffe 158 ist ein Mechanismus vorgesehen, der eine erste Rampenscheibe 167a und eine zweite Rampenscheibe 167b umfasst. Die Rampenscheibe 167b ist bei der dargestellten Ausführungsform relativ zu einem nicht dargestellten Gehäuse weder drehbar noch axial beweglich. Die Rampenscheibe 167a hingegen ist relativ zur Rampenscheibe 167b um einen beschränkten Sektor, vorzugsweise mindestens 90° drehbar und axial verschieblich. Zwischen den Rampenscheiben 167a und 167b sind Abstandskugeln 170 angeordnet, die in Führungen 169a, 169b der Rampenscheiben 167a, 167b laufen. Diese Führungen sind, wie in Fig. 3 erkennbar, rampenartig ausgebildet, d.h. ihre Tiefe ändert sich mit der Länge der Erstreckung der Führungen. Bei der gezeigten Ausführungsform ist lediglich die Führung 169a in der Rampenscheibe 167a rampenartig ausgebildet, während die Führung 169b der Rampenscheibe 167b eine gleichmäßige Tiefe aufweist. Da die Rampenscheibe 167a über die Schiebemuffe 158 mit der Federkraft 164 gegen die Rampenscheibe 167b kraftbeaufschlagt ist, ist sichergestellt, dass beide Rampenscheiben 167a und 167b stets in Kontakt zu den Abstandskugeln 170 stehen. Dies bedeutet, dass eine Drehung der drehbaren Rampenscheibe 167a gegenüber der festen Rampenscheibe 167b zu einer Abstandsänderung der Rampenscheiben 167a, 167b führt, was in der Folge zu einer Axialbewegung der Schiebemuffe 158 führt.

Die Drehung der drehbaren Rampenscheibe 167a wird durch einen Elektromotor 166 initiiert, der über ein in Fig. 3 nicht erkennbares Stirnrad mit einer in Fig. 3 ebenfalls nicht erkennbaren Verzahnung der drehbaren Rampenscheibe 167a wechselwirkt.

Die drehbare Rampenscheibe 167a ist von der Schiebemuffe 158 über ein Axiallager 159 drehentkoppelt. Die Rampensteigung der Führung 169a der drehbaren Rampenscheibe 167a ist der vorgesehenen Drehrichtung des Schaltrades 152 entgegengesetzt. Dies bedeutet, dass im Fall einer Blockade des Axiallagers 159, d.h. wenn die drehbare Rampenscheibe 167a in nicht vorgesehener Weise von der Drehung des Schaltrades 152 mitgerissen wird, der Abstand zwischen den Rampenscheiben 167a, 167b verringert wird. Mit anderen Worten wird in diesem Fall die Kupplungseinrichtung in ihre Lösestellung überführt und die Schaltwelle 154 vom Schaltrad 152 entkoppelt.

Durch die zuvor erwähnte Federvorspannung mittels der Feder 164, die sich bei der gezeigten Ausführungsform gegen den Synchronkörper 162 abstützt, wird zudem sichergestellt, dass bei Ausfall des Elektromotors 166 die dreh- und axial bewegbare Rampenscheibe 167a in Richtung der starren Rampenscheibe 167b gedrückt wird, so dass die Kupplungseinrichtung ebenfalls in ihre Lösestellung überführt wird. Hierzu muss lediglich gewährleistet sein, dass die Rampensteigung kein selbstsperrendes Gewinde darstellt. Dieser Vorteil wird jedoch mit der allerdings nicht nachteiligen Notwendigkeit erkauft, den Elektromotor 166 zur Aktivierung seiner elektrischen Bremse nicht nur während des eigentlichen Drehvorganges sondern auch zum Halten der Kupplungsvorrichtung in der Koppelstellung zu bestromen.

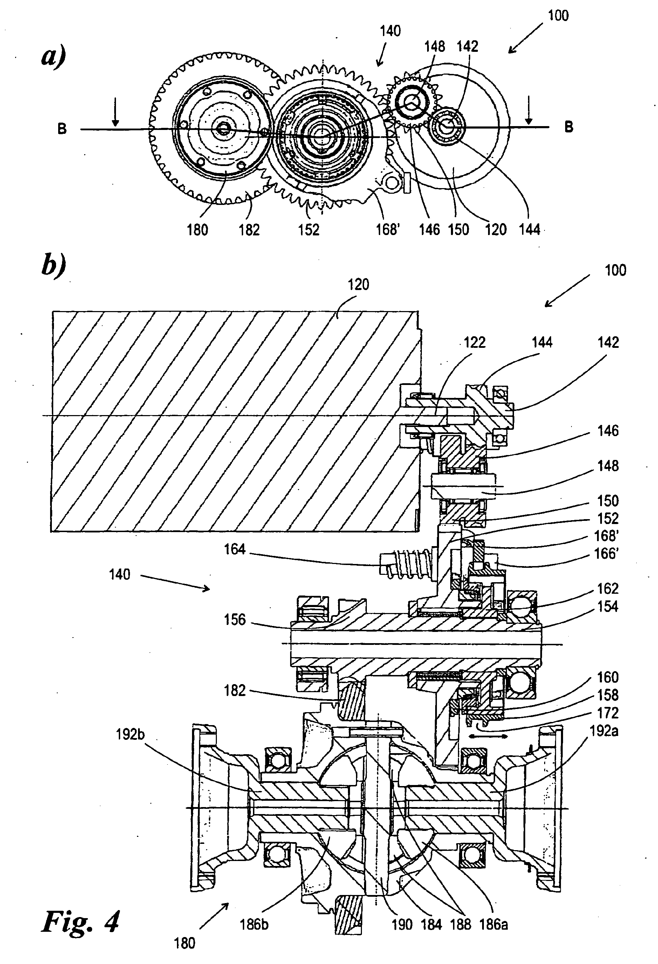

Fig. 4 zeigt eine zweite Ausführungsform eines erfindungsgemäßen Achsantriebs 100, wobei gleiche Bezugszeichen wie in Fig. 2 gleiche oder analoge Elemente bezeichnen. Der Klarheit halber sollen bei der Beschreibung von Fig. 4 nur diejenigen Merkmale ausführlich diskutiert werden, in denen sich die Ausführungsform von Fig. 4 von derjenigen von Fig. 2 unterscheidet. Im Übrigen wird auf die detaillierte Beschreibung von Fig. 2 verwiesen.

Wesentlicher Unterschied zur Ausführungsform von Fig. 2 ist die Realisierung des Betätigungselementes, mit dem die Betätigungseinrichtung 166' auf die Schiebemuffe 158 einwirkt, um diese mit einer axialen Schaltkraft zu beaufschlagen. Wie insbesondere in Teilfigur a) von Fig. 4 erkennbar ist, ist bei der gezeigten Ausführungsform das Betätigungselement als eine tangential angreifende Klaue 168' ausgeführt. Die Klaue 168' greift in eine Ringnut 172 der Schiebemuffe 158 ein. Man beachte, dass bei der Ausführungsform von Fig. 4 die Schiebemuffe 158 auf der im Vergleich zur Ausführungsform von Fig. 2 anderen Seite des Schaltrades 152 angreift. Ein weiterer konstruktiver Unterschied ist die Verlagerung der Federn 164 nach außerhalb der Schiebemuffe 158. Die Federkraft wirkt bei dieser Ausführungsform auf die Klaue 168' ein und somit nur mittelbar auf die Schiebemuffe 158. Die Verlagerung nach außen vereinfacht den inneren Aufbau der Synchronisierung.

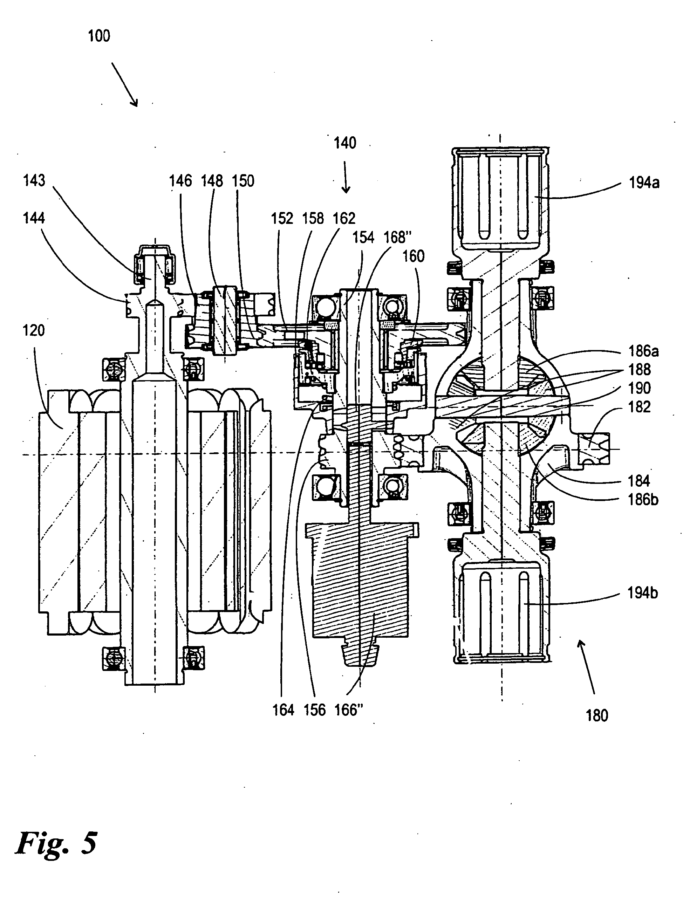

Fig. 5 zeigt eine dritte Ausführungsform des erfindungsgemäßen Achsantriebs 100, wobei wiederum gleiche Bezugszeichen gleiche oder analoge Elemente wie in den Figuren 2 und 4 bezeichnen. Zum Zwecke der Klarheit wird auch hier bzgl. der im Wesentlichen gleichen Elemente auf die vorangehende Beschreibung verwiesen. Es sollen lediglich die Besonderheiten der Ausführungsform von Fig. 5 im Vergleich zu den Ausführungsformen der Figuren 2 und 4 ausführlicher diskutiert werden.

Bei der Ausführungsform von Fig. 5 sind die Eingangswelle des Übertragungsgetriebes 140 und die Abtriebswelle der Elektromaschine 120 einstückig ausgebildet. Dies bedeutet eine vollständige Integration der Elektromaschine 120 in den Achsantrieb 100. Die kombinierte Welle trägt in Fig. 5 das Bezugszeichen 143.

Ein weiterer Unterschied zu den vorangehend diskutierten Ausführungsformen ist die Anordnung der Betätigungseinrichtung 166" und deren Betätigungselementes 168". Während die Betätigungseinrichtung 166 bzw. 166' bei den Ausführungsformen gemäß Figuren 2 und 4 parallel benachbart zu der Schaltwelle 154 angeordnet war, ist sie bei der Ausführungsform von Fig. 5 in Verlängerung der hohl ausgeführten Schaltwellen 154 angeordnet. Das Betätigungselement 168" ist stößelartig ausgebildet und ragt in die hohle Schaltwelle 154 hinein. Der Stößel 168" ist zweiteilig ausgebildet, wobei der Stößelkopf drehbar gegen den Stößelhals gelagert ist und die Schaltwelle 154 nach außen durchsetzt, um dort an der Schiebemuffe 158 anzugreifen. Der Kopf des Stößels 168" dreht sich mit der Schaltwelle 154 mit, während sein Hals drehfest mit der gehäusefesten Betätigungseinrichtung 166 gekoppelt ist. Diese Ausführungsform ist zwar mechanisch relativ aufwendig, bietet jedoch im Hinblick auf den Bauraumbedarf erhebliche Vorteile, insbesondere gegenüber der Ausführungsform von Fig. 4.

Schließlich unterscheidet sich die Ausführungsform von Fig. 5 in der Gestaltung des Differentials 180. Als Schnittstellen zu den nicht dargestellten Gelenkwellen sind bei der Ausführungsform von Fig. 5 keine Flanschwellen vorgesehen. Vielmehr sind mit den Achsrädern 186a und 186b Einsteckelemente 194a und 194b verbunden, in die Gelenkwellen direkt einsteckbar sind.

Natürlich stellen die in den Figuren gezeigten und in der speziellen Beschreibung diskutierten Ausführungsformen lediglich illustrative Ausführungsbeispiele der vorliegenden Erfindung dar. Im Rahmen der hier offenbarten Lehre stehen dem Fachmann vielfältige Variationsmöglichkeiten zur Verfügung. Beispielsweise wurde nicht detaillierter auf die Lagerung des Übertragungsgetriebes 140 eingegangen. Diese ist jedoch vorzugsweise als Fest-Los-Lagerung, d.h. nicht als Kegelrollenlager, ausgeführt. Wie bereits erwähnt, kann das Differential 180 im Wesentlichen wie ein herkömmliches Differential ausgebildet werden. Besonders vorteilhaft sind jedoch Ausführungsformen, bei denen das Achsantriebsrad 182 am Differentialkorb 184 angeschweißt ist. Dabei kann die Schweißnaht als Axialnaht mit Entlastungskerbe im Differentialgehäuse ausgeführt sein. Die Zentrierung des Achsantriebsrades 182 erfolgt vorzugsweise über einen radialen Presssitz mit großer Überdeckungslänge. Aufgrund der niedrigen Achsmomente ist für die Verbindung des Achsantriebsrades 182 und des Differentialgehäuses auch ein Presssitz mit zusätzlicher Verklebung oder Schneidverzahnung am Achsantriebsrad 182 denkbar.

Der erfindungsgemäße Achsantrieb kann mit einer Start/Stopp-Funktion im Rahmen eines Hybridsystems zur Rekuperation und zum elektrischen Antrieb verwendet werden, wobei eine als Niedervoltsystem geführte Leistungselektronik einsetzbar ist.

Günstigerweise wird ein Generator mit einer fliegenden Betriebsspannung von bis zu 60 Volt (Niedervolt) eingesetzt. Der Generator liefert die elektrische Leistung direkt an die kapazitive Energiespeicher, so genannten "Supercaps". Bei komplett entladenen "Supercaps" und Anforderung der Allradfunktionalität liefert der Generator die größtmögliche Leistung über die Supercaps an die Elektromaschine des erfindungsgemäßen Achsantriebs. Die Allradfunktion kann somit stets (auch bei entladenen Supercaps) genutzt werden. Darüber hinaus ist keine weitere Stützbatterie für die Hybridfunktionalität vorgesehen. Das Bordnetz wird über eine separate "Bleibatterie" mit Spannung versorgt. Die Ladung der Batterie erfolgt über einen DC/DC-Wandler, welcher von den Supercaps mit Spannung versorgt wird.

Für die Start/Stopp-Funktionalität wird vorzugsweise kein eigenes Steuergerät verwendet, sondern das Motorsteuergerät um die erforderlichen Hardware- und Softwareumfänge erweitert (Master). Das Getriebesteuergerät (Slave) empfängt Sollvorgaben vom Motorsteuergerät. Für eine komfortable, aber wenig aufwendige Startfunktionalität wird der Starter vorzugsweise voreingespurt, d. h. bei Motorstillstand wird der Starter bereits in den Starterzahnkranz eingespurt. Der Starter kann bei Anforderung somit ohne weitere Verzögerung beginnen zu drehen. Der Starterzahnkranz wird für die erhöhten Lastwechselanforderungen verstärkt. Alternativ dazu sind andere Starterkonzepte, wie etwa verstärkter Starter, unterstützter Direktstart, Riemenstarter oder Kurbelwellenstarter denkbar.

Der Klimakompressor wird für hohen Komfort für eine bestmögliche Ausnutzung der Rekuperationsenergie vorzugsweise elektrisch angetrieben. Bei Höherbewertung der Kostenaspekte ist ein mechanischer Klimakompressor ebenfalls möglich.

Die Start/Stopp-Funktionalität ist prinzipiell mit jeder Motor/Getriebe-Variante kombinierbar. Vorzugsweise kommen aber automatische und automatisierte Getriebe zum Einsatz. Die Änderungen am Vorderwagen sind gering und können in die Modulstrategie eingepflegt werden. Die elektrische Hinterachse kann in den Bauraum von Hinterachsantrieben eingesetzt werden. Die Hinterachse ist dabei vorzugsweise 100% COP von herkömmlichen Allradfahrzeugen der betroffenen Plattform.

Die Supercaps werden gemeinsam mit der Leistungselektronik im Hinterwagen, vorzugsweise in der Reserveradmulde des Fahrzeugs platziert. Die Kühlung dieser Elemente erfolgt vorzugsweise durch Konvektion. Hierzu werden beispielsweise in die vorzugsweise aus Kunststoff gefertigte "Reserveradmulde" Lüftungskanäle eingebracht. Bei einer anderen Platzierung sind entsprechend andere Lüftungskanäle in die Karosserie einzubringen, wodurch dann allerdings Karosserievarianten entstehen. Im Bedarfsfall können diese mittels eines thermostatbetätigten Ventilators zwangsbelüftet werden. Eine Zusatzkühlung durch Unterstützung durch Wärmetauscher ist nicht erforderlich.

Die herkömmliche "Bleibatterie" sowie der DC/DC-Wandler werden vorzugsweise ebenfalls im Hinterwagen platziert. Diese Anordnung ermöglicht kürzeste Leitungslängen sowohl von Steuer- als auch von Leistungskabeln, sowie eine möglichst einfache Integration der Fertigung von Hybridfahrzeugen in die Produktionsprozesse und -anlagen vorzugsweise von Allradfahrzeugen.

Die Funktionen Boosten, elektrisches Fahren und traktionsunterstütztes Allrad werden durch eine Fahrzustandserkennung automatisch ausgeführt oder können als direkte Fahreranforderung zugeschaltet werden (Allrad). Die Funktionen elektrisches Fahren und Boosten sind dabei aufgrund der geringen Speicherkapazität der Supercaps nur über kurze Distanzen möglich.

Ein "elektrisches" Bremspedal ist vorzugsweise nicht vorgesehen. D.h. die Bremswirkung wird in Abhängigkeit des Rekuperationsanteil (Füllungsgrad der Supercaps) bei gleicher Bremspedalstellung variieren. Eine Rekuperation wird bei Geschwindigkeiten bis etwa 120 km/h ermöglicht. Oberhalb dieser Geschwindigkeit oder bei Anforderung des "Bremsassistenten" (ABS, ESP, EDS) wird die Elektromaschine von den Rädern getrennt. Bei der Fahrzeuggeschwindigkeit von ca. 120 km/h soll die Elektromaschine mit Drehzahlen von bis zu 15.000 U/min rotieren. Höhere Drehzahlen werden vorzugsweise vermieden, um nicht unangemessen hohe Anforderungen an die thermische Stabilität der Elektromaschine, Verzahnungsgeräusche, Lagerlebensdauer, Wuchtgenauigkeit etc. erfüllen zu müssen.

Die Elektromaschine sollte eine Leistung von etwa 9.000 Watt besitzen. Dabei soll ein Anfahrmoment von durchschnittlich 450 Nm an der Hinterachse erreicht werden. Je nach Ladungszustand der Supercaps kann dieses Anfahrmoment variieren. Das maximale Moment bei vollgeladenen Supercaps und einer Spannung von 60 Volt sollte 900 Nm betragen. Das Anfahrmoment sollte bis zu Geschwindigkeiten von mindestens 10 km/h anliegen. Elektrisches Fahren und Allradantrieb sollten bis etwa 30 km/h möglich sein.

### Bezugszeichenliste

- 10: Kraftfahrzeug
- 12: Verbrennungsmotor
- 14: Elektromaschine
- 16: Schaltgetriebe
- 18: Differential
- 20a: Gelenkwelle
- 20b: Gelenkwelle
- 22a: Vorderrad
- 22b: Vorderrad
- 24: Differential
- 26a: Gelenkwelle
- 26b: Gelenkwelle
- 28a: Hinterrad
- 28b: Hinterrad
- 100: Achsantrieb
- 120: Elektromaschine
- 122: Abtriebswelle von 120
- 140: Übertragungsgetriebe
- 142: Eingangswelle von 140
- 143: Kombinationswelle
- 144: Stirnrad von 142/143
- 146: erstes Zwischenrad
- 148: Bolzen
- 150: zweites Zwischenrad
- 152: Schaltrad
- 154: Schaltwelle/Triebwelle
- 156: Triebrad
- 158: Schiebemuffe
- 159: Axiallager
- 160: Kupplungskörper
- 162: Synchronköper
- 164: Feder
- 166: Elektromotor
- 166': Betätigungseinrichtung
- 166": Betätigungseinrichtung
- 167a,b: Betätigungselement Rampenscheiben
- 168': Betätigungselement Klaue
- 168": Betätigungselement Stößel
- 169a,b: Führung in 167a,b
- 170: Abstandskugel
- 172: Ringnut in 158
- 180: Differential
- 182: Achsantriebsrad
- 184: Differentialkorb
- 186a: Achsrad
- 186b: Achsrad
- 188: Koppelrad
- 190: Bolzen
- 192a: Flanschwelle
- 192b: Flanschwelle
- 194a: Steckaufnahme
- 194b: Steckaufnahme

## Patentansprüche

1. Achsantrieb für ein Kraftfahrzeug, umfassend
- eine Elektromaschine (120) zur Erzeugung eines Momentes,
- ein Differential (180) zur Verteilung eines eingeleiteten Momentes an mit dem Differential (180) koppelbare Räder,
- ein als ein Stirnradgetriebe ausgebildetes Übertragungsgetriebe (140) mit mehreren jeweils eine Welle und wenigstens ein auf der Welle angeordnetes Stirnrad umfassenden Stufen, zur Übertragung des von der Elektromaschine (120) erzeugten Momentes auf das Differential (180) sowie
- eine Schalteinrichtung zur wahlweisen An- und Abschaltung der Momentenübertragung von der Elektromaschine (120) auf die Räder,
wobei
eine Eingangswelle (142; 143) des Übertragungsgetriebes (140) direkt mit einer Abtriebswelle (122, 143) der Elektromaschine (120) gekoppelt ist und
eine Ausgangswelle (154) des Übertragungsgetriebes (140) ein Triebrad (156) trägt, das mit einer Verzahnung (182) eines Differentialkorbes (184) des Differentials (180) kämmt, und mittels der Schalteinrichtung eine drehfeste Verbindung eines als Schaltrad (152) wirkenden Stirnrades einer Stufe des Übertragungsgetriebes (140) mit seiner zugeordneten, als Schaltwelle (154) wirkenden Welle wahlweise herstellbar oder lösbar ist und die Schalteinrichtung eine axial auf der Schaltwelle (154) bewegbare und drehfest mit ihr verbundene Schiebemuffe (158) mit einer Verzahnung aufweist, die im eingekuppelten Zustand in eine Verzahnung eines mit dem Schaltrad (152) drehfest verbundenen Kupplungskörpers (160) eingreift,
**dadurch gekennzeichnet,**
**dass** die Schiebemuffe (158) mittels eines in der hohlen Schaltwelle (154) angeordneten Betätigungselementes (168") einer Betätigungseinrichtung (166") bewegbar ist.

2. Achsantrieb nach Anspruch 1, **dadurch gekennzeichnet, dass** das Schaltrad (152) auf der Ausgangswelle (154) des Übertragungsgetriebes (140) angeordnet ist.

3. Achsantrieb nach einem der vorangehenden Ansprüche, **dadurch gekennzeichnet, dass** die Schalteinrichtung als Klauenkupplung ausgebildet ist.

4. Achsantrieb nach einem der Ansprüche 1 oder 2, **dadurch gekennzeichnet, dass** die Schalteinrichtung als Synchronisierung ausgebildet ist, wobei ein gegenüber der Schiebemuffe (158) beschränkt drehbeweglicher Synchronkörper (162) das Eingreifen erst gestattet, wenn keine Relativbewegung zwischen Schaltrad (152) und Schaltwelle (154) vorliegt.

5. Achsantrieb nach einem der Ansprüche 3 bis 4, **dadurch gekennzeichnet, dass** die Schiebemuffe (158) derart federvorgespannt ist, dass das Schaltrad (152) und die Schaltwelle (154) im unbetätigten Zustand der Schiebemuffe (158) entkoppelt sind.

6. Achsantrieb nach einem der vorangehenden Ansprüche, **dadurch gekennzeichnet, dass** die Eingangswelle (143) des Übertragungsgetriebes (140) einteilig mit der Abtriebswelle (143) der Elektromaschine (120) ausgebildet ist.

7. Achsantrieb nach einem der Ansprüche 1 bis 6, **dadurch gekennzeichnet, dass** die Eingangswelle (142) des Übertragungsgetriebes (140) mittels einer Welle/Nabe-Verbindung mit der Abtriebswelle (122) der Elektromaschine (120) gekoppelt ist.

8. Achsantrieb nach einem der vorangehenden Ansprüche, **dadurch gekennzeichnet, dass** die Abtriebswelle (122; 143) der Elektromaschine (122), die Wellen des Übertragungsgetriebes (142; 143; 146/150; 154) und der Differentialkorb (184) parallel zueinander angeordnet sind.

9. Achsantrieb nach einem der vorangehenden Ansprüche, **gekennzeichnet durch** eine elektrisch betätigte Kupplungseinrichtung zum wahlweisen Herstellen und Lösen einer drehfesten Verbindung zwischen der Schaltwelle (154) und dem koaxial auf der Schaltwelle (154) angeordneten Schaltkörper (152) **durch** elektrische Verstellung eines Koppelgliedes (158), das zwischen einem Lösezustand, in dem die Schaltwelle (154) und der Schaltkörper (152) gegeneinander verdrehbar sind, und einem Koppelzustand, in dem das Koppelglied (158) sowohl die Schaltwelle (154) als auch das Schaltelement (152) drehfest kontaktiert, verstellbar ist, wobei ein Paar koaxial zu der Schaltwelle (154) angeordneter Rampenscheiben (167a, 167b) mit einander gegenüberliegenden, korrespondierenden und sich ring- oder teilringförmig erstreckenden Führungen (169a, 169b) von denen wenigstens eine eine sich über ihre Länge rampenartig ändernde Tiefe aufweist, zur Führung von Abstandskugeln (170), wobei eine der Rampenscheiben (167b) axial gehäusefest und die andere der Rampenscheiben (167a) axial verschiebbar ist und eine der Rampenscheiben (167a) relativ zu der anderen (167b) mittels eines Elektromotors (166) über einen beschränkten Sektor derart drehbar ist, dass mit der Drehung ein **durch** Wechselwirkung der Abstandskugeln (170) mit ihren Führungen (169a, 169b) bestimmter Abstand der Rampenscheiben (167a, 167b) einstellbar und das mit der axial verschiebbaren Rampenscheibe (167a) in Wirkkontakt stehende und als Schiebemuffe (158) ausgebildete Koppelglied zwischen seiner Koppelstellung und seiner Lösestellung axial verschoben werden kann.

10. Achsantrieb nach Anspruch 9, **dadurch gekennzeichnet, dass** der Schaltkörper ein auf der Schaltwelle (154) angeordnetes Schaltrad (152) ist.

11. Achsantrieb nach einem der Ansprüche 9 oder 10, **dadurch gekennzeichnet, dass** ein von dem Elektromotor (166) betätigtes Stirnrad mit einer Verzahnung der drehbaren Rampenscheibe (167a) kämmt.

12. Achsantrieb nach einem der Ansprüche 9 bis 11, **dadurch gekennzeichnet, dass** das die drehbare Rampenscheibe (167a) auch die axial verschiebbare ist.

13. Achsantrieb nach einem der Ansprüche 9 bis 12, **dadurch gekennzeichnet, dass** der Sektor, in dem die drehbare Rampenscheibe (167a) drehbar ist, wenigstens 90° beträgt.

14. Achsantrieb nach einem der Ansprüche 9 bis 13, **dadurch gekennzeichnet, dass** die Schiebemuffe (158) über einen Synchronkörper (162) eine formschlüssige Verbindung zwischen der Schaltwelle (154) und dem Schaltkörper (152) erzeugt.

15. Achsantrieb nach einem der Ansprüche 9 bis 14, **dadurch gekennzeichnet, dass** die Schiebemuffe (158) nach Art einer Klauenkupplung direkt eine formschlüssige Verbindung zwischen der Schaltwelle (154) und dem Schaltkörper (152) erzeugt.

16. Achsantrieb nach einem der Ansprüche 9 bis 15, **dadurch gekennzeichnet, dass** die Schiebemuffe (158) derart federvorgespannt ist, dass im stromlosen Zustand des Elektromotors (166) die Kupplung in ihrem Lösezustand gehalten und der Abstand der Rampenscheiben (167a, 167b) zueinander minimiert ist.

17. Achsantrieb nach einem der Ansprüche 9 bis 16, **dadurch gekennzeichnet, dass** die zur Abstandssteigerung der Rampenscheiben (167a, 167b) erforderliche Drehung der Drehrichtung des Schaltkörpers (152) im Koppelzustand entgegen gerichtet ist.

18. Achsantrieb nach einem der Ansprüche 9 bis 17, **dadurch gekennzeichnet, dass** ein Sensor vorgesehen ist, der beim Schaltvorgang das Erreichen des Koppelzustandes erkennt und einem Steuergerät meldet, das dann eine elektrische Bremse des Elektromotors (166) betätigt.

## Claims

1. Axle drive for a motor vehicle, comprising
- an electric machine (120) for generating a torque,
- a differential (180) for distributing an introduced torque to wheels that can be coupled to the differential (180),
- a transmission gearing (140), which is designed as a spur gear mechanism and which has a plurality of stages comprising in each case one shaft and at least one spur gear arranged on the shaft, for transmitting the torque generated by the electric machine (120) to the differential (180), and
- a switching device for selectively activating and deactivating the transmission of torque from the electric machine (120) to the wheels,
wherein
an input shaft (142; 143) of the transmission gearing (140) is coupled directly to a drive output shaft (122, 143) of the electric machine (120), and
an output shaft (154) of the transmission gearing (140) bears a drive gear (156) which meshes with a toothing (182) of a differential cage (184) of the differential (180),
and a rotationally conjoint connection of a spur gear, which acts as a switching gear (152), of a stage of the transmission gearing (140) to its
associated shaft, which acts as a switching shaft (154), can be produced or eliminated by means of the switching device,
and the switching device has a sliding sleeve (158) which is axially movable on the switching shaft (154) and which is connected to the latter for conjoint rotation therewith and which has a toothing which, in the coupled state, engages into a toothing of a coupling body (160) connected to the switching gear (152) for conjoint rotation therewith,
**characterized**
**in that** the sliding sleeve (158) can be moved by means of an actuating element (168"), which is arranged in the hollow switching shaft (154), of an actuating device (166").

2. Axle drive according to Claim 1, **characterized in that** the switching gear (152) is arranged on the output shaft (154) of the transmission gearing (140).

3. Axle drive according to one of the preceding claims, **characterized in that** the switching device is designed as a claw coupling.

4. Axle drive according to either of Claims 1 and 2, **characterized in that** the switching device is designed as a synchronizer, with a synchronizing body (162) which is rotatable to a limited extent relative to the sliding sleeve (158) permitting the engagement only when there is no relative movement between the switching gear (152) and switching shaft (154).

5. Axle drive according to either of Claims 3 and 4, **characterized in that** the sliding sleeve (158) is spring-preloaded in such a way that the switching gear (152) and the switching shaft (154) are decoupled in the non-actuated state of the sliding sleeve (158).

6. Axle drive according to one of the preceding claims, **characterized in that** the input shaft (143) of the transmission gearing (140) is formed in one piece with the drive output shaft (143) of the electric machine (120).

7. Axle drive according to one of Claims 1 to 6, **characterized in that** the input shaft (142) of the transmission gearing (140) is coupled to the drive output shaft (122) of the electric machine (120) by means of a shaft/hub connection.

8. Axle drive according to one of the preceding claims, **characterized in that** the drive output shaft (122; 143) of the electric machine (122), the shafts of the transmission gearing (142; 143; 146/150; 154) and the differential cage (184) are arranged parallel to one another.

9. Axle drive according to one of the preceding claims, **characterized by** an electrically actuated coupling device for selectively producing and eliminating a rotationally conjoint connection between the switching shaft (154) and the switching body (152), which is arranged coaxially on the switching shaft (154), by means of an electric adjustment of a coupling element (158) that can be adjusted between a released state, in which the switching shaft (154) and the switching body (152) are rotatable relative to one another, and a coupled state, in which the coupling element (158) makes contact, for conjoint rotation, both with the switching shaft (154) and also with the switching element (152), and by a pair of ramp discs (167a, 167b), which are arranged coaxially with respect to the switching shaft (154) and which have mutually opposite, corresponding guides (169a, 169b) which extend in the shape of a ring or a part of a ring and at least one of which has a depth which changes in a ramped manner over its length, for guiding spacer balls (170), wherein one of the ramp discs (167b) is axially fixed with respect to a housing and the other of the ramp discs (167a) is axially movable and one of the ramp discs (167a) can be rotated relative to the other (167b) over a limited sector by means of an electric motor (166), in such a way that, by means of the rotation, a spacing between the ramp discs (167a, 167b) defined by the interaction of the spacer balls (170) with their guides (169a, 169b) can be adjusted, and the coupling element which is in operative contact with the axially movable ramp disc (167a) and which is designed as a sliding sleeve (158) can be moved axially between its coupled position and its released position.

10. Axle drive according to Claim 9, **characterized in that** the switching body is a switching gear (152) arranged on the switching shaft (154).

11. Axle drive according to either of Claims 9 and 10, **characterized in that** a spur gear which is actuated by the electric motor (166) meshes with a toothing of the rotatable ramp disc (167).

12. Axle drive according to one of Claims 9 to 11, **characterized in that** the rotatable ramp disc (167a) is also the axially movable one.

13. Axle drive according to one of Claims 9 to 12, **characterized in that** the sector in which the rotatable ramp disc (167a) can rotate amounts to at least 90°.

14. Axle drive according to one of Claims 9 to 13, **characterized in that** the sliding sleeve (158) produces, by means of a synchronizing body (162), a positively locking connection between the switching shaft (154) and the switching body (152).

15. Axle drive according to one of Claims 9 to 14, **characterized in that** the sliding sleeve (158), in the manner of a claw coupling, directly produces a positively locking connection between the switching shaft (154) and the switching body (152).

16. Axle drive according to one of Claims 9 to 15, **characterized in that** the sliding sleeve (158) is spring-preloaded in such a way that, when the electric motor (166) is in the electrically deenergized state, the coupling is held in its released state and the spacing of the ramp discs (167a, 167b) to one another is minimized.

17. Axle drive according to one of Claims 9 to 16, **characterized in that** the rotation required for increasing the spacing of the ramp discs (167a, 167b) is in the opposite direction to the direction of rotation of the switching body (152) in the coupled state.

18. Axle drive according to one of Claims 9 to 17, **characterized in that** a sensor is provided by means of which, during the switching process, the attainment of the coupled state is detected and signaled to a control unit, which then actuates an electric brake of the electric motor (166).

## Revendications

1. Commande d'essieu pour un véhicule automobile, comprenant :
- une machine électrique (120) pour produire un couple,
- un différentiel (180) pour distribuer un couple introduit à des roues pouvant être accouplées au différentiel (180),
- un engrenage de transmission (140) réalisé sous forme d'engrenage à pignons droits, avec plusieurs étages comprenant à chaque fois un arbre et au moins un pignon droit disposé sur l'arbre, pour le transfert du couple produit par la machine électrique (120) au différentiel (180), et
- un dispositif de commutation pour activer et désactiver, de manière sélective, le transfert de couple de la machine électrique (120) aux roues,
un arbre d'entrée (142 ; 143) de l'engrenage de transmission (140) étant accouplé directement à un arbre de prise de force (122, 143) de la machine électrique (120) et
un arbre de sortie (154) de l'engrenage de transmission (140) portant une roue de commande (156) qui s'engrène avec une denture (182) d'une coquille de différentiel (184) du différentiel (180), et une connexion fixe en rotation d'un pignon droit servant de roue de commutation (152) d'un étage de l'engrenage de transmission (140) à son arbre agissant en tant qu'arbre de commutation (154) pouvant être établie ou libérée de manière sélective au moyen du dispositif de commutation, et le dispositif de commutation présentant un manchon coulissant (158) avec une denture, déplaçable axialement sur l'arbre de commutation (154) et connecté de manière fixe en rotation à celui-ci, lequel vient en prise, dans l'état embrayé, dans une denture d'un corps d'embrayage (160) connecté de manière fixe en rotation à la roue de commutation (152),
**caractérisée en ce que**
le manchon coulissant (158) peut être déplacé au moyen d'un élément d'actionnement (168") d'un dispositif d'actionnement (166") disposé dans l'arbre de commutation creux (145).

2. Commande d'essieu selon la revendication 1, **caractérisée en ce que** la roue de commutation (152) est disposée sur l'arbre de sortie (154) de l'engrenage de transmission (140).

3. Commande d'essieu selon l'une quelconque des revendications précédentes, **caractérisée en ce que** le dispositif de commutation est réalisé sous forme d'embrayage à griffes.

4. Commande d'essieu selon l'une quelconque des revendications 1 ou 2, **caractérisée en ce que** le dispositif de commutation est réalisé sous forme de synchronisation, un corps de synchronisation (162) mobile en rotation de manière limitée par rapport au manchon coulissant (158) permettant l'engagement seulement lorsqu'il n'y a aucun mouvement relatif entre la roue de commutation (152) et l'arbre de commutation (154).

5. Commande d'essieu selon l'une quelconque des revendications 3 à 4, **caractérisée en ce que** le manchon coulissant (158) est précontraint par ressort de telle sorte que la roue de commutation (152) et l'arbre de commutation (154) soient désaccouplés dans l'état désaccouplé du manchon coulissant (158).

6. Commande d'essieu selon l'une quelconque des revendications précédentes, **caractérisée en ce que** l'arbre d'entrée (143) de l'engrenage de transmission (140) est réalisé d'une seule pièce avec l'arbre de prise de force (143) de la machine électrique (120).

7. Commande d'essieu selon l'une quelconque des revendications 1 à 6, **caractérisée en ce que** l'arbre d'entrée (142) de l'engrenage de transmission (140) est accouplé au moyen d'une connexion d'arbre/moyeu à l'arbre de prise de force (122) de la machine électrique (120).

8. Commande d'essieu selon l'une quelconque des revendications précédentes, **caractérisée en ce que** l'arbre de prise de force (122 ; 143) de la machine électrique (122), les arbres de l'engrenage de transmission (142 ; 143 ; 146/150 ; 154) et la coquille de différentiel (184) sont disposés parallèlement les uns aux autres.

9. Commande d'essieu selon l'une quelconque des revendications précédentes, **caractérisée par** un dispositif d'embrayage à commande électrique pour établir et libérer de manière sélective une connexion fixe en rotation entre l'arbre de commutation (154) et le corps de commutation (152) disposé coaxialement sur l'arbre de commutation (154) par un réglage électrique d'un organe d'accouplement (158), qui peut être déplacé entre un état libéré, dans lequel l'arbre de commutation (154) et le corps de commutation (152) peuvent tourner l'un par rapport à l'autre, et un état d'accouplement, dans lequel l'organe d'accouplement (158) vient en contact de manière fixe en rotation à la fois avec l'arbre de commutation (154) et avec l'élément de commutation (152), et par une paire de disques à rampe (167a, 167b) disposés coaxialement à l'arbre de commutation (154) avec des guides (169a, 169b) correspondants, opposés l'un à l'autre, et s'étendant sous forme d'anneau ou d'anneau partiel, dont au moins l'un présente une profondeur variant en forme de rampe sur sa longueur, pour le guidage de billes d'espacement (170), l'un des disques à rampe (167b) étant fixé axialement au boîtier et l'autre des disques à rampe (167a) étant déplaçable axialement, et l'un des disques à rampe (167a) pouvant tourner par rapport à l'autre (167b) au moyen d'un moteur électrique (166) sur un secteur limité de telle sorte qu'avec la rotation, un espacement des disques à rampe (167a, 167b) déterminé par l'interaction des billes d'espacement (170) avec leurs guides (169a, 169b) puisse être ajusté et que l'organe d'accouplement en contact fonctionnel avec le disque à rampe (167a) déplaçable axialement puisse être déplacé axialement entre sa position d'accouplement et sa position de libération.

10. Commande d'essieu selon la revendication 9, **caractérisée en ce que** le corps de commutation est une roue de commutation (152) disposée sur l'arbre de commutation (154).

11. Commande d'essieu selon l'une quelconque des revendications 9 ou 10, **caractérisée en ce qu'**un pignon droit actionné par le moteur électrique (166) s'engrène avec une denture du disque à rampe rotatif (167a).

12. Commande d'essieu selon l'une quelconque des revendications 9 à 11, **caractérisée en ce que** le disque à rampe rotatif (167a) est aussi le disque à rampe déplaçable axialement.

13. Commande d'essieu selon l'une quelconque des revendications 9 à 12, **caractérisée en ce que** le secteur dans lequel le disque à rampe rotatif (167a) peut tourner vaut au moins 90°.

14. Commande d'essieu selon l'une quelconque des revendications 9 à 13, **caractérisée en ce que** le manchon coulissant (158) produit par le biais d'un corps de synchronisation (162) une connexion par engagement positif entre l'arbre de commutation (154) et le corps de commutation (152).

15. Commande d'essieu selon l'une quelconque des revendications 9 à 14, **caractérisée en ce que** le manchon coulissant (158) produit, à la manière d'un embrayage à griffes une connexion par engagement positif directement entre l'arbre de commutation (154) et le corps de commutation (152).

16. Commande d'essieu selon l'une quelconque des revendications 9 à 15, **caractérisée en ce que** le manchon coulissant (158) est précontraint par ressort de telle sorte que, dans l'état non alimenté du moteur électrique (166), l'embrayage soit maintenu dans son état de libération et que la distance entre les disques à rampe (167a, 167b) soit minimisée.

17. Commande d'essieu selon l'une quelconque des revendications 9 à 16, **caractérisée en ce que** la rotation nécessaire pour augmenter la distance entre les disques à rampe (167a, 167b) est orientée dans le sens inverse du sens de rotation du corps de commutation (152) dans l'état accouplé.

18. Commande d'essieu selon l'une quelconque des revendications 9 à 17, **caractérisée en ce qu'**il est prévu un capteur qui, lors de l'opération de commutation, détecte l'état d'accouplement atteint et le communique à un appareil de commande qui actionne alors un frein électrique du moteur électrique (166).
